# EUROPEAN PATENT SPECIFICATION

(11) **EP 0 639 713 B1**
(45) Date of publication and mention of the grant of the patent: **10.01.1996**
(21) Application number: 94106926.2
(22) Date of filing: 03.05.1994
(51) Int. Cl.: F04B 53/14, F04B 5/00

(54) **Plunger pump**
Kolbenpumpe
Pompe à piston

(30) Priority: 13.05.1993 JP 111544/93
(43) Date of publication of application: 22.02.1995
(73) Proprietor: SUMITOMO ELECTRIC INDUSTRIES, LIMITED, Osaka 541 (JP)
(72) Inventor: Nokubo, Seiji, c/o Itami Works of, Itami-shi, Hyogo (JP); Kohno, Teruhisa, c/o Itami Works of, Itami-shi, Hyogo (JP)
(74) Representative: Eder, Thomas, Dr.-Ing.

(56) References cited:
- FR-A- 2 601 725
- GB-A- 2 087 036
- GB-A- 2 253 882

## Description

### PLUNGER PUMP

This invention relates to a side suction type plunger pump used as a fluid pressure source for a fluid pressure control unit or the like.

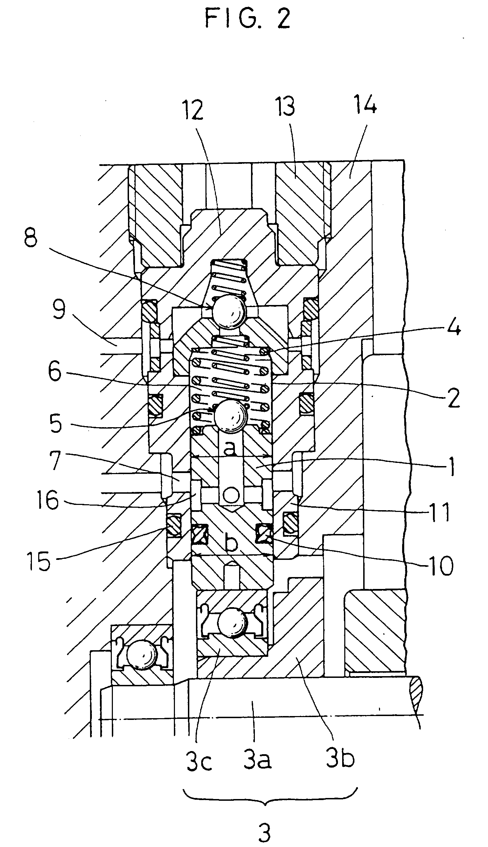

Fig. 2 shows one example of a conventional plunger pump of this type used in a brake fluid pressure control unit for automobile. GB-A-2.253.882 discloses such a plunger/pump.

As shown in this figure, it comprises a plunger 1 inserted in a cylinder 2, a plunger driving member 3 comprising a driving shaft 3a provided with an eccentric cam 3b and a bearing 3c mounted on the cam 3b, a return spring 4, a suction valve 5 for opening and closing a passage between a pressure chamber 6 and a suction port 7, a discharge valve 8 for opening and closing a passage between a pressure chamber 6 and a discharge port 9, a seal 10 for sealing the outer periphery of the plunger 1 at its end open to the air, a plunger case 11, an end plug 12 coupled to the rear end of the plunger case 11 with a seal on its outer periphery, and a plug screw 13 for securing the plunger case 11 and the end plug 12 to a unit housing 14.

The plunger 1 has one end disposed in the pressure chamber 6 and the other end open to the air and protruding out of the cylinder 2. It is pushed against the outer periphery of the bearing 3c by the return spring 4. In the plunger pump, the driving shaft 3a is rotated to move the plunger 1 up and down, so that a fluid introduced from the side of the plunger is compressed in the pressure chamber 6 and discharged to the discharge port 9.

As is apparent from Fig. 2, such a conventional plunger pump had the following problems because the diameter a of the pressure-applying portion of the plunger 1 is the same as the diameter b of the sealed portion at its open end.

Namely, in this side suction type pump, when the seal 10 passes the lateral hole (suction port 7) in mounting the plunger 1, it might get caught between the edge of the hole and the edge of the seal groove and thus get damaged. For this reason, the plunger case 11 is provided to accommodate the plunger 1 from its opening. Then, the plunger case 11 now accommodating the plunger 1 is mounted in the unit housing 14 so that the seal 10 will not come into tight contact with the lateral hole. In this arrangement, since it was necessary to provide the plunger case 11 and a seal 15 on its outer periphery, the number of necessary parts increased. It was disadvantageous in terms of cost, downsizing and the number of assembling steps.

Moreover, it was difficult to assemble the plunger so as not to get out of the case.

It is an object of the present invention to provide a plunger pump which obviates the above problems.

According to the present invention, there is provided a plunger pump of a side suction type which has a plunger having a larger diameter on the pressure-applying portion at one end than the diameter of a sealed portion near the other end, and a suction port being provided on a large-diameter portion of the cylinder whose diameter corresponds to the diameter of the one end of the plunger.

With this arrangement, there is formed a gap between the inner wall of the large-diameter portion of the cylinder corresponding to the pressure-applying portion of the plunger and the outer periphery of the sealed portion of the plunger, due to the diametric difference on the plunger. Therefore, even if the plunger is mounted in the cylinder from its top, the seal will not get damaged at the suction port. Thus, there is no need to provide a plunger case.

It is preferable that the plunger is mounted directly to the cylinder directly formed in a unit housing, instead of providing a plunger case, in order to reduce the number of parts and cost. However, even if the plunger case is provided, a good effect, i.e. improving working efficiency will still be expected, which will be described later.

By providing a difference between the diameters of the pressure-applying portion and the sealed portion of the plunger, the seal will not get caught or bitten even if the plunger is mounted in the cylinder from its top. Thus, a good effect such as reduction in the cost, size and the number of mounting steps can be obtained by omitting the plunger case.

Furthermore, since the problem of the disengagement is overcome, the mounting operation will be easier, which is also expected to improve the suction efficiency.

Other objects and features will become apparent from the following description taken with reference to the accompanying drawings, in which:
Fig. 1 is a sectional view showing one embodiment of the plunger pump according to the present invention; and
Fig. 2 is a sectional view showing a conventional side suction type plunger pump.

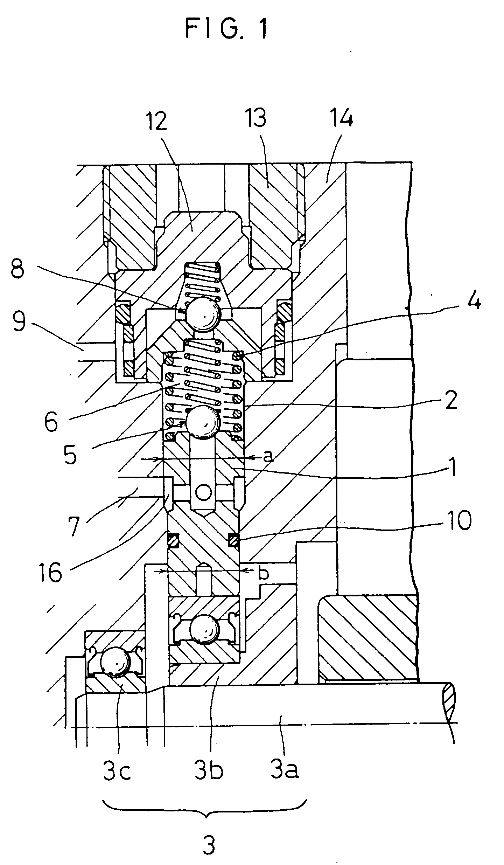

Fig. 1 shows a plunger pump according to the present invention which comprises a cylinder 2 formed in a unit housing 14, and a plunger 1 directly mounted in the cylinder 2.

The plunger 1 has a large-diameter portion at its pressure-applying side and a small-diameter portion at its sealed side. The diameter a at the pressure-applying side of the plunger is larger than the diameter b at its sealed side. The cylinder 2, too, has a large-diameter portion and a small-diameter portion that correspond to those of the plunger 1. An edge formed at the shoulder portion of the cylinder is chamfered.

A suction port 7 is open to the large-diameter portion of the cylinder 2. Thus, if the difference in diameter on the plunger (i.e. a - b) is larger than the tightening allowance of a seal 10, the seal will pass the suction port 7 without contacting the edge of the suction port 7 while the plunger 1 is inserted into the cylinder 2. Thus, the seal 10 will not get caught or bitten in the suction port or get damaged.

After the plunger 1 has been inserted in the cylinder 2, an end plug 12 in which a return spring 4, a suction valve 5 and a discharge valve 8 have been mounted is mounted. Finally, a plug screw 13 is tightened. Because the pump is not provided with a plunger case, the cylinder 2 will not be distorted even if the plug screw 13 is tightened. Also, the slidability of the plunger is stable. However, if it is desired to replace and recycle the cylinder 2, it is necessary to provide a plunger case. In this case, the stepped cylinder complementary to the plunger is formed by working a plunger case. After the plunger case has been inserted in the unit housing, the plunger is inserted into the plunger case from its rear. This will solve the problem of poor working efficiency while mounting.

In the prior art plunger pump of Fig. 2, the volume of a fluid reservoir 16 will not change even while the plunger is moving up and down. However, in the structure of the present invention, due to the diametric difference between diameters a and b, the volume of the fluid reservoir will decrease during the suction step (and increase during the compression step). Therefore, the fluid is introduced smoothly into the pressure chamber and have a higher suction efficiency compared to the conventional structure.

## Claims

1. A plunger pump of a side suction type comprising a pump body (14), a plunger (1) having one end thereof disposed in a pressure chamber (6) and the other end thereof being open to the air, a driving member (3) for driving said plunger, a return spring (4) for urging said plunger against said driving member, a cylinder (2) accommodating said plunger, said pump body being formed with a suction port (7) open in said cylinder and with a discharge port (9), and a seal (10) provided on the outer periphery of said plunger at a position nearer to said other end of said plunger, said plunger being reciprocated to suck fluid through said suction port and compress and discharge the fluid through said discharge port,
characterized in that the diameter (a) at said one end of said plunger is larger than the diameter (b) thereof near said other end, and said suction port being provided on a large-diameter portion of said cylinder whose diameter corresponds to the diameter at said one end of said plunger.

## Patentansprüche

1. Kolbenpumpe für seitliches Ansaugen mit einem Pumpenkörper (14), einem Kolben (1), dessen eines Ende sich in einer Druckkammer (6) befindet, während das andere Ende freiliegt mit einem Antriebselement (3) zum Antrieb des Kolben, einer Rückstellfeder (4), um den Kolben gegen das Antriebselement zu drücken und mit einem Zylinder (2), der den Kolben aufnimmt, wobei der Pumpenkörper eine im Zylinder befindliche Ansaugöffnung (7) und eine Auslaßöffnung (9) aufweist, sowie eine Dichtung (10), die an der äußeren Umfangsfläche des Kolbens näher am anderen Ende desselben angeordnet ist, wobei der Kolben sich hin- und herbewegt, um durch die Ansaugöffnung eine Flüssigkeit anzusaugen, zu verdichten und durch die Auslaßöffnung abzugeben, **dadurch gekennzeichnet**, daß der Durchmesser (a) an dem einen Ende des Kolbens (1) größer ist als der Durchmesser (b) des Kolbens (1) nahe dessen anderem Ende,
und daß die Ansaugöffnung (7) an einem einen großen Durchmesser aufweisenden Bereich des Zylinders (2) angeordnet ist, dessen Durchmesser dem Durchmesser (a) an dem einen Ende des Kolbens (1) entspricht.

## Revendications

1. Pompe à piston plongeur du type à aspiration latérale comprenant un carter (14) de pompe, un piston plongeur (1) dont une extrémité est placée dans une chambre de pression (6) et dont l'autre extrémité est en contact avec l'air, un organe d'entraînement (3) destiné à entraîner ledit piston plongeur, un ressort de rappel (4) destiné à solliciter ledit piston plongeur contre l'organe d'entraînement, un cylindre (2) logeant ledit piston plongeur, ledit carter de pompe étant muni d'un orifice d'aspiration (7) débouchant dans ledit cylindre et d'un orifice de refoulement (9), et un joint d'étanchéité (10) placé à la périphérie externe dudit piston plongeur en un emplacement proche de ladite autre extrémité du piston plongeur, ce piston plongeur ayant un mouvement de va-et-vient pour aspirer un fluide par l'orifice d'aspiration et pour comprimer et pour refouler le fluide par ledit orifice de refoulement, caractérisé en ce que le diamètre (a) du piston plongeur au niveau de ladite une extrémité est supérieur au diamètre (b) du piston plongeur au voisinage de ladite autre extrémité, et ledit orifice d'aspiration est placé sur une partie de grand diamètre du cylindre dont le diamètre correspond au diamètre au niveau de ladite une extrémité du piston plongeur.
